# EUROPEAN PATENT APPLICATION

(11) **EP 2 245 919 A2**
(43) Date of publication of application: **03.11.2010**
(21) Application number: 10161153.1
(22) Date of filing: 27.04.2010
(51) Int. Cl.: A01G 3/04

(54) **Apparatus for limbing**

(30) Priority: 29.04.2009 FI 20090173
(71) Applicant: Norrvik Product Ab Oy, 64320 Dagsmark (FI)
(72) Inventor: Norrvik, Egil, 64320, Dagsmark (FI)
(74) Representative: Niemi, Hakan Henrik

(57) **Abstract**

The present invention relates to a trunk trimming device with which standing, growing trees can be mechanically trimmed. By means of a telescopic unit, the device pushes up the trimming knives (14, 15, 16) along the tree trunk and trims the tree to a desired height. The device may also be used for thinning and handling the felled timber as with conventional harvesting equipment. The trimming device is advantageously arranged in a smaller forestry machine.

## Description

### TECHNICAL FIELD

The present invention relates to a trunk trimming device, which refers to a device for mechanical trimming of standing, growing trees. A trunk trimming device with the present structure utilizes a telescopically projecting trimming unit for achieving a desired height for the trunk.

### PRIOR ART

So far, trimming has primarily been performed manually with a trimming knife or saw provided with an extendable arm. This is heavy and time-consuming work.

In Sweden, there is presently a prototype of a trunk trimming device called "Klas Klättermus", which has been presented in the journal ATL, for example. This device "climbs" up the tree trunk in trimming. This trunk trimming device is carried and handled manually by two people in trimming work, and its weight is about 70 kg. When the device climbs up the trunk, the bark is easily damaged and rotting may be generated in the tree. Such a trunk trimming device is, in addition, heavy to handle in uneven terrain.

### PRESENTATION OF THE PROBLEM

The present invention allows the problems of known solutions to be avoided completely. Thus, the trunk trimming device according to the invention is given the characterizing features presented in claim 1. The subsequent dependent claims present appropriate further developments and variations of the invention which further improve its functioning.

With the device described in the present invention, a plurality of significant advantages are achieved over the prior art. Such a trunk trimming device is advantageously transported mechanically by means of a small cross-country carrier, for example a forestry machine known as such, with which it is easy to go forwards even in very difficult terrain.

The invention also allows several work stages to be carried out during a single work shift. In addition to trunk trimming of standing, growing trees, regular thinning of a forest can thus be carried out with the same equipment. Further, the felled timber can be handled with completely conventional harvesting equipment. This mixing possibility in the work significantly decreases the labour input as well as treading and root damages in the forest.

### DESCRIPTION OF THE FIGURES

In the following, the invention is described in more detail with reference to the attached drawings, in which
Figure 1 shows a side view of the trunk trimming device, whereby the area of the body which is marked with lines constitutes the outer frame part of the telescope;
Figure 2 shows a side view of the trunk trimming device according to Figure 1, sectioned and with the telescope extracted halfway, and the positioning and fastening points of the chains;
Figure 2a shows a side view of an alternative embodiment of the trunk trimming device according to Figure 1, with a hydraulic cylinder for extracting the telescope, as well as the chains and the positioning of the chain fasteners;
Figure 3 shows the trunk trimming device from behind, with the telescope extracted; and the positioning of the chains; and

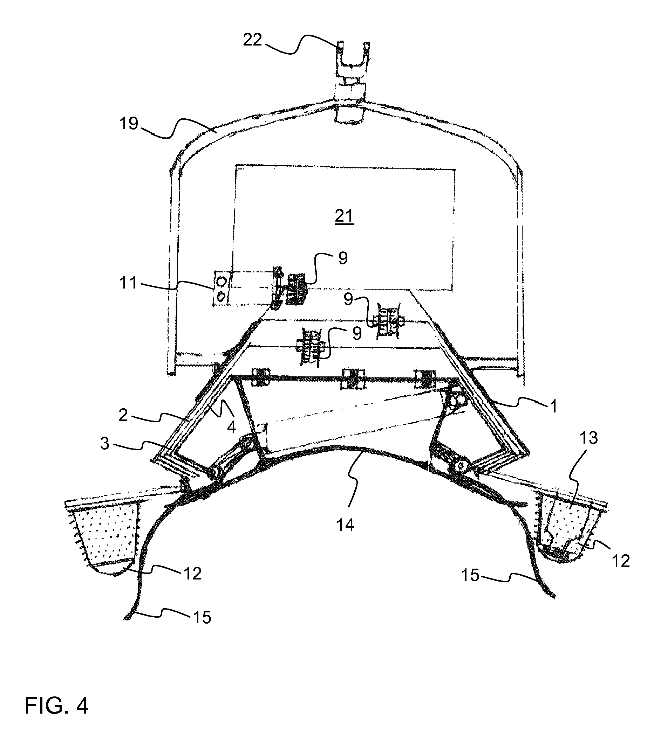

Figure 4 shows a cross-sectioned trunk trimming device.

### PREFERRED EMBODIMENT

The above-mentioned figures do not show the trunk trimming device in scale but have only the task of illustrating structural solutions of the preferred embodiments and the functioning of the embodiments. Hereby, the structural parts shown in the figures and denoted with reference numerals correspond to the structural solutions which are presented in the description below and thus also provided with reference numerals.

The reference numerals in the sense of the following description:

| | |
|---|---|
| 1 body | 15 primary trimming knife, moving part |
| 2 to 4 projecting telescope parts | 16 floating additional knife |
| 5 to 8 drive chains | 17 crosscut saw |
| 9 support rolls | 18 crosscut motor |
| 10 chain fasteners | 19 tilting part |
| 11 actuator for the telescope | 20 tilting cylinder |
| 12 feed rolls | 21 valve housing |
| 13 feed motor | 22 rotating motor (rotor) |
| 14 primary trimming knife, fixed part | |

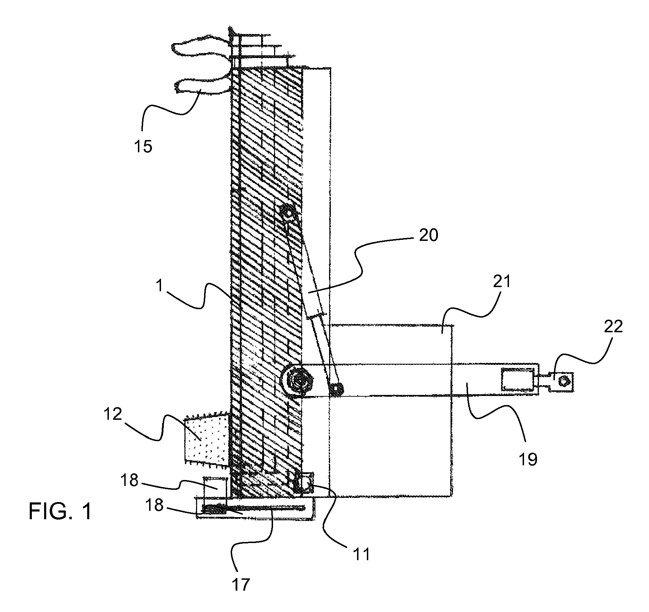

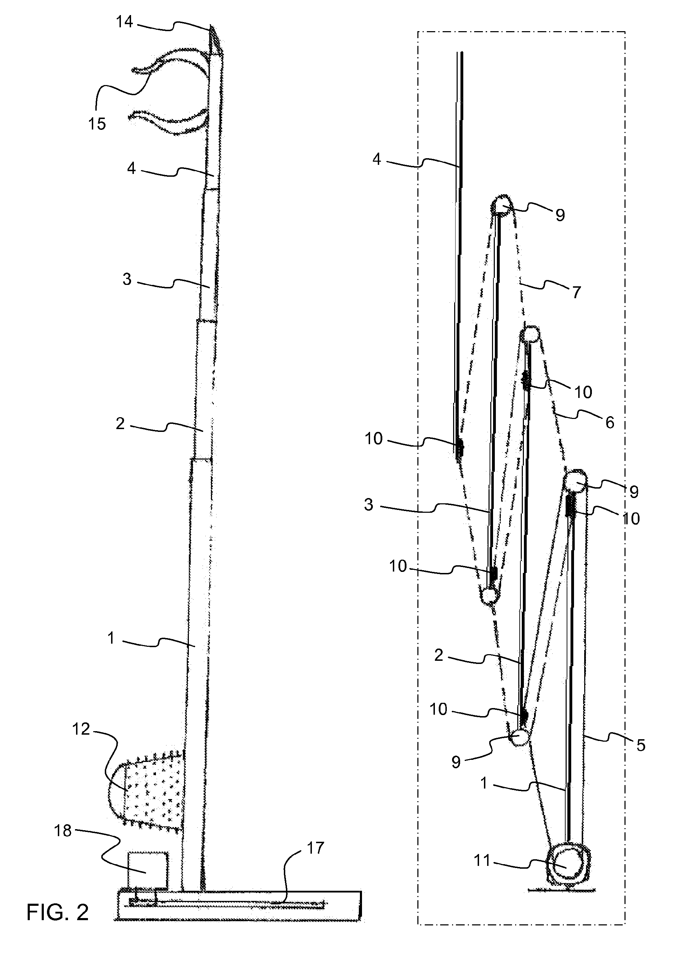

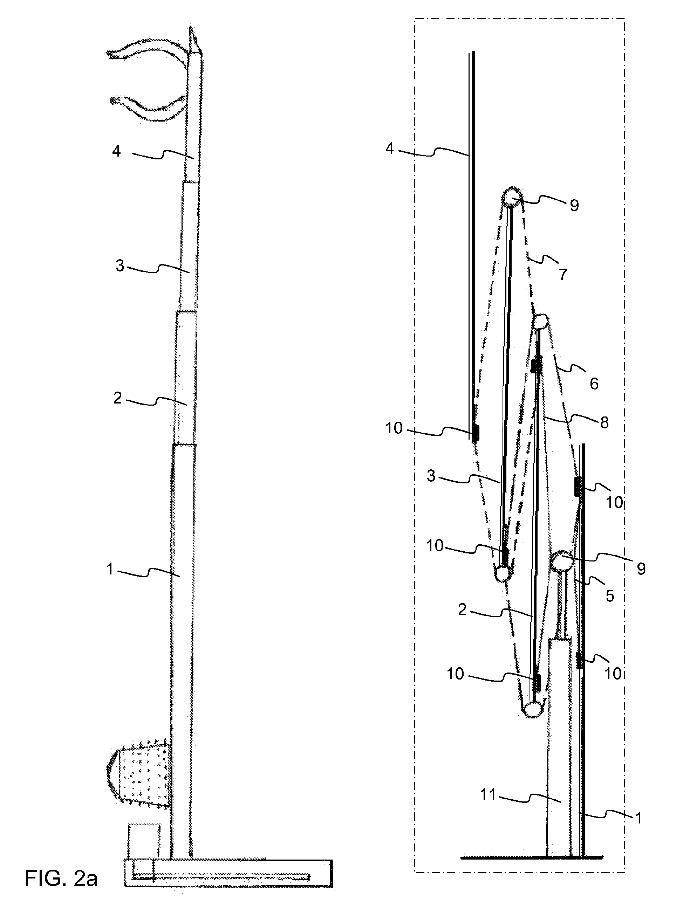

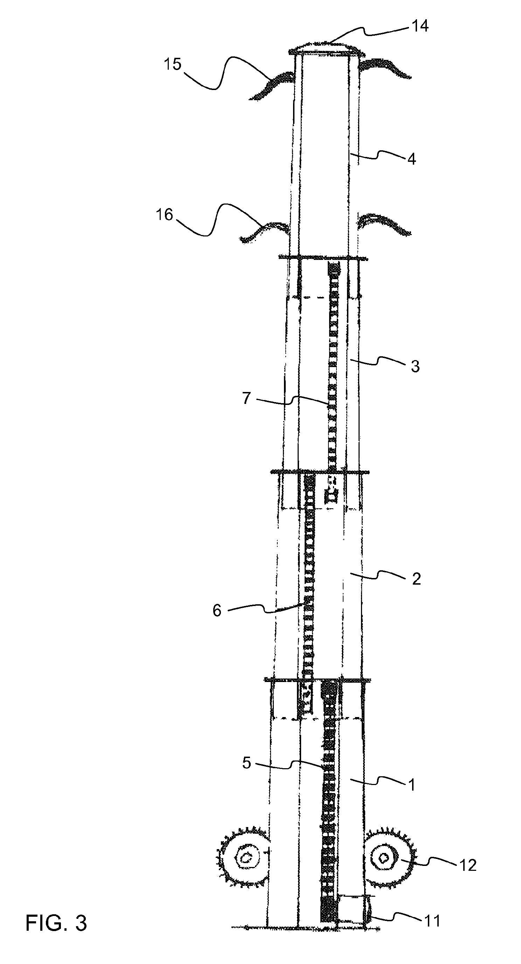

The present trunk trimming device is intended, in particular, for mechanical trimming of a tree trunk of a standing, growing tree. The trunk trimming device is constructed on a substantially fixed body 1, which is primarily formed of the outer frame part of a telescope and illustrated by the part with diagonal lines in Figure 1. Further, the trunk trimming device comprises primary trimming knives 14 and 15 with which branches can be removed from the tree trunk. For guiding these trimming knives along the tree trunk, the trunk trimming device comprises two or more telescopically projecting telescope parts 2 to 4. These can be seen best in Figures 2, 2a and 3. In the embodiments illustrated in the figures, the number of projecting telescope parts is shown to be three. It is, however, obvious that the number of telescope parts may vary.

The above primary trimming knives 14 and 15 are arranged in the last telescope part 4, which becomes positioned closest to the tree trunk during the operation of the trunk trimming device and is moved foremost when the telescope is guided in the direction towards the top of the tree trunk. More precisely, these trimming knives are arranged substantially at that end of the telescope part which is towards the top of the tree trunk.

As can be seen from Figure 3, the trunk trimming device is also provided with what is called floating additional knives 16. These are preferably arranged in pairs in the same telescope part as the trimming knives 14 and 15 but substantially at its opposite end. These additional knives are, in the same way as the primary trimming knives 15, arranged to surround the tree trunk with a reduced pressure. In this way, the trimming knives have a lower pressure against the tree trunk, and generation of wounds at the cut point of a branch can be reduced to a minimum. If the additional knives are placed between the feed rolls 12 of the trunk trimming device and the primary trimming knives 14 and 15 arranged at the top of the trimming device, the additional knives should have floating fastening to improve the way in which the additional knives follow the crooked trunk.

Despite the fact that the embodiments illustrated in the figures show trimming knives 14, 15 and 16, i.e. three trimming knives, it is obvious that the number of trimming knives may vary.

A trimming device according to the present embodiment also comprises a crosscut saw 17 with which a tree trunk surrounded by the trunk trimming device can be felled. The crosscut saw is guided by means of a crosscut motor 18. The cut tree trunk can subsequently be manoeuvred to a horizontal position with a tilting part 19 and a tilting cylinder 20 of the device. A rotating motor 22 allows the tree trunk to be rotated in relation to the forestry machine for achieving a more preferable position in the terrain. With the feed rolls 12, the tree trunk can subsequently be trimmed and cut in the same way as with conventional forestry machine equipment. To get a better grip around the tree trunk, the feed rolls preferably have a substantially conical shape, the base thereof being oriented towards the body 1 of the trunk trimming device, which results in the tree finding its way towards the machine in feeding.

The telescope parts of the trunk trimming device 2 to 4 are arranged to be pushed up along the tree trunk with drive chains 5 to 8 arranged to connect the telescope parts to each other and to transmit a lifting force generated by an actuator 11 with uniform motion to the telescope parts. The present construction has made it possible to give each individual projecting telescope part such a travel speed relative to the preceding telescope part that substantially corresponds to the speed of this preceding telescope part. Thus, what it comes to the speeds of the individual telescope parts, the first projecting telescope part 2 has a speed v. The following telescope part 3 assumes, after that, a speed corresponding to 2 * *v,* the third telescope part 4 assumes a speed corresponding to 4 * *v,*and so on. Each subsequent telescope part thus assumes a travel speed which doubles its travel speed relative to the body 1, compared with the travel speed of the preceding telescope part.

This doubling of the travel speeds of the telescope parts 2 to 4 has been achieved by a drive chain 5 to 8 of the telescope part being rigidly fastened to substantially the top of the adjacent previous telescope part and to substantially the base of the adjacent later telescope part. The construction is illustrated in Figures 2 and 2a.

When examining Figure 2, for example, one can see on the left-hand side the trunk trimming device extracted halfway. A box next to it shows the functioning of the drive chains. The body 1 can thus be seen at the bottom on the right-hand side. At the base of the body, there is an actuator 11 which, in this embodiment, preferably comprises a hydraulic motor. The hydraulic motor guides a first drive chain 5, which goes round the top of the body and returns to the hydraulic motor. The movements of the chain are preferably supported with one or more support rolls 9 arranged on the body. Between the top of the body and the hydraulic motor, however, the drive chain is rigidly fastened to the first telescope part 2. The chain fastener is denoted with reference numeral 10. Thus, when rotating clockwise, the hydraulic motor forces the telescope part 2 to move in parallel with the body and in a direction away from the hydraulic motor. An upward movement thus takes place on the image plane. The trunk trimming device is hereby extended, and the trimming knives 14 and 15 are pushed upwards along the tree trunk.

Except the outermost last part 4, also each of the telescope parts 2 and 3 has drive chains 6 and 7. In Figure 2, the drive chain 6 is thus arranged in the telescope part 2 in such a way that it goes round the base and the top of the telescope part. Here, too, there may preferably be support rolls 9 for facilitating the movements of the drive chain. By fastening the drive chain 6 on one hand to the top of the body and on the other hand at the base of the following telescope part 3 to the fastening points 10, the driving force of the hydraulic motor is transmitted to the telescope part 3. The telescope part 3 is finally connected, in the way described above, to the telescope part 4, which thus moves in relation to the hydraulic motor. When the drive chain 5 guided by the hydraulic motor 11 reaches the end of its path of movement, the trunk trimming device has assumed a position shown in Figure 3.

Since the drive chains 5, 6 and 7 are fastened to the base of the corresponding telescope part, a change in the rotation direction of the hydraulic motor will proceed in the same way from one telescope part to another, whereby the rotation oriented anticlockwise retracts the trunk trimming device, which, in this way, assumes its initial position shown in Figure 1.

On the other hand, when examining an embodiment according to Figure 2a, the trunk trimming device extracted halfway can be seen on the left-hand side. A box next to it shows the functioning of the drive chains. Here, too, the body 1 can be seen at the bottom on the right-hand side. Adjacent to the body, there is an actuator 11 which, in this embodiment, preferably comprises a hydraulic cylinder substantially parallel to the body. The hydraulic cylinder guides a first drive chain 5, which is fastened to the body, goes round a support roll 9 arranged at the top of the hydraulic cylinder and is, at its opposite end, fastened to the first telescope part 2. When it is thus extended, the hydraulic cylinder forces the telescope part 2 to move in parallel with the body and in the direction away from the hydraulic cylinder. The trunk trimming device is thus extended and the trimming knives 14 and 15 are pushed upwards along the tree trunk.

Also each of the telescope parts 2 and 3, except the outermost last part 4, has drive chains 6 and 7. In Figure 3, the drive chain 5 is arranged in the telescope part 2 in such a way that it goes round the base and top of the telescope part. Also in this embodiment, the support rolls 9 can be seen. By fastening the drive chain 6 on one hand to the top of the body 1 and on the other hand to the base of the following telescope part 3, the driving force of the hydraulic cylinder is transmitted to the telescope part 3. The telescope part 3 is finally connected, in the way described above, to the telescope part 4, which is thus moved in relation to the hydraulic cylinder. When the hydraulic cylinder is completely extracted, the trunk trimming device has assumed a position shown in Figure 3.

In order to return the telescope parts to the initial position of the trunk trimming device, the arrangement comprises a second drive chain 8 guided by the hydraulic cylinder. This drive chain 8 goes round the support roll 9 at the top of the hydraulic cylinder and is fastened substantially to the top of the body 1 at its first end and to the top of the first telescope part 2 at its opposite end. Retraction of the hydraulic cylinder will thus proceed in the same way from one telescope part to the other, and the trunk trimming device assumes its initial position shown in Figure 1.

When each new projecting telescope part 2, 3 and 4 of the trunk trimming device is given a doubled speed vis-à-vis the body 1 of the telescope, the trimming procedure of the tree trunk will go very smoothly at the same time as the trimming knives 15 and 16 can have a lower pressure against the trunk, and the generation of wounds at the cut point of a branch is reduced to a minimum. The travel speed of a telescope part is preferably about 5 m/second.

When the tree is to be trimmed, the trunk trimming device arranged in its initial position - cf. Figure 1 - is placed against the ground at the root of the tree. The trimming knives 15 are arranged to surround the tree trunk with reduced pressure. After this, the moving telescope parts 2, 3 and 4, to which the trimming knives 14, 15 and 16 are fastened, are moved up along the tree trunk with quick uniform motion. Moving along the tree trunk, the trimming knives cut off the branches up to a desired height from the root of the tree. The trunk trimming device is hence shown in a position where it is extracted halfway in Figures 2 and 2a, and in a position where it is completely extracted in Figure 3. After the trimming of a tree trunk has been completed, the telescope parts return to their initial position shown in Figure 1.

The trunk trimming device allows, in addition to trunk trimming, also regular thinning of a standing forest to be carried out during the same work shift. At a first work stage, the trunk trimming device is thus placed against the tree trunk close to the root of the tree. Subsequently, the trimming knives 15 are arranged to surround the tree trunk, after which the feed rolls 12 of the lower part of the body 1 are pressed against the tree trunk. At the following work stage, the crosscut saw 17 can cut the tree trunk, and the tilting part 19 of the trunk trimming device, shown in Figure 1, and the tilting cylinder 20 arranged in it can push the tree down in a desired direction. The feed rolls, which are preferably driven by a hydraulic feed motor 13 arranged thereto, subsequently feed the tree onwards through the nip formed by the trimming knives 14 and 15 to trim the tree trunk in a manner known as such. At the work stages now following each other cyclically, the crosscut saw 17 cuts the trimmed tree trunk to desired lengths.

The above description and the presented figures are only intended to illustrate the present solution for construction of a trunk trimming device. Thus, the solution is not restricted only to the embodiments described above or in the attached claims but a plurality of variations or alternative embodiments are feasible within the idea described in the attached claims.

## Claims

1. A trunk trimming device for mechanical trimming of a tree trunk of a standing, growing tree, the trunk trimming device comprising
a body (1);
primary trimming knives (14, 15) for removing branches from the tree trunk, whereby
the body comprises two or more telescopically projecting telescope parts (2, 3, 4);
**characterized in that**
the trimming knives (14, 15) are arranged in the last telescope part (4) in such a way that they are substantially at that end of the telescope part which is oriented towards the top of the tree trunk when the trunk trimming device is arranged against the tree trunk,
which primary trimming knives (15) are arranged to surround the tree trunk with a reduced pressure; and
the telescope parts are arranged to be pushed up along the tree trunk with drive chains (5, 6, 7, 8) arranged to connect the telescope parts to each other and to transmit a driving force generated by an actuator (11) with uniform motion to the telescope parts, and that
the trunk trimming device also comprises a crosscut saw (17), a tilting part (19) and a tilting cylinder (20) for felling and cutting a tree trunk.

2. A trunk trimming device according to claim 1, **characterized in that** said last telescope part (4) is provided with floating additional knives (16) at its end opposite the trimming knives (14, 15).

3. A trunk trimming device according to claim 2, **characterized in that** the additional knives (16) are arranged to surround the tree trunk with a reduced pressure.

4. A trunk trimming device according to any one of the preceding claims, **characterized in that** each individual projecting telescope part (2, 3, 4) is arranged to assume such a travel speed relative to the preceding telescope part that substantially corresponds to the speed of this preceding telescope part
to give, in this way, each projecting telescope part a doubled speed relative to the body (1).

5. A trunk trimming device according to claim 4, **characterized in that** a drive chain (5, 6, 7) of the telescope part (2, 3, 4) is rigidly fastened to substantially the top of the adjacent previous telescope part and to substantially the base of the adjacent later telescope part.

6. A trunk trimming device according to any one of the preceding claims, **characterized in that** the actuator (11) comprises a hydraulic motor.

7. A trunk trimming device according to any one of the preceding claims 1 to 5, **characterized in that** the actuator (11) comprises a hydraulic cylinder.

8. A trunk trimming device according to any one of the preceding claims, **characterized in that** the feed rolls (12) have a substantially conical shape, with the base thereof being oriented towards the body (1).
